# EUROPEAN PATENT APPLICATION

(11) **EP 4 206 531 A1**
(43) Date of publication of application: **05.07.2023**
(21) Application number: 22217208.2
(22) Date of filing: 29.12.2022
(51) Int. Cl.: F23J 15/00, F23J 15/04, B01D 53/68, B01D 53/50

(54) **METHOD AND DEVICE FOR CLEANING FLUE GAS FROM THE INCINERATION OF CHLORINE-COMPRISING MATERIAL AND OBTAINED CLEANED FLUE GAS**

(30) Priority: 30.12.2021 BE 202106117
(71) Applicant: Indaver nv, 9130 Beveren (BE)
(72) Inventor: ALDERWEIRELDT, Nick, 9130 Beveren (BE); NELISSEN, Tom, 9130 Beveren (BE)
(74) Representative: Brantsandpatents bv

(57) **Abstract**

The invention relates to a method for cleaning flue gas originating from the combustion of chlorine-comprising material, in which at least the following cleaning steps are applied to the flue gas:
- cooling and absorbing pollutants in a quench;
- absorbing pollutants in one or more packed columns;
- adsorbing pollutants on one or more activated carbon filters;
- absorbing pollutants in one or more absorption columns; and
- expelling cleaned flue gas thus obtained,
characterized in, that an absorbent flows through the packed columns in the opposite direction of flow to the flue gas and consists of at least 90 wt% water upon entering one or more absorption columns.

The invention also relates to a device for cleaning flue gas, and also relates to cleaned flue gas per se.

## Description

### TECHNICAL FIELD

The invention relates to a method and a device for cleaning flue gas originating from the combustion of chlorine-comprising material, and to a cleaned flue gas itself.

### PRIOR ART

The main contaminants or pollutants present in flue gas from incinerators for the combustion of chlorine-comprising material, such as liquid waste material, biomass, residual products or carbons with a high sulfur content, are carbon monoxide, unburned hydrocarbons, sulfur oxides (SOx), hydrogen chloride (HCl) and other hydrogen halides (HF, HBr), nitrogen oxides (NOx), heavy metals, polychlorinated biphenyls (PCBs), dioxins and other halogenated aromatic and aliphatic hydrocarbons. It is important that the flue gas can be cleaned so that it meets the established emission values for emissions.

For example, WO 2003 002 912 describes a combustion device for integrated heat recovery and flue gas purification, which comprises at least the following essentially integrated sections: (a) a combustion chamber or incinerator; (b) a heat recovery section; (c) one or more acid removal sections; (d) one or more DeNOx sections; (e) a stepped dedusting section; (f) one or more sections for the removal of chlorinated hydrocarbons; (g) an adapted measuring and control section for controlling the various steps of flue gas cleaning and heat recovery. The invention further comprises the use of such an integrated incinerator for incinerating polluted combustible substances, such as waste, for instance household and industrial waste. WO '912 describes the capture of pollutants by means of an absorbent such as quicklime, calcium hydroxide, limestone or sodium carbonate.

RU 2429 900 describes a method for the treatment of flue gas produced during combustion in a boiler and containing NOx, SOx and mercury, consisting of the addition of a mercury halogenating compound and ammonia to the flue gas. The metallic mercury (Hg⁰) is halogenated to HgCl₂ in the presence of HCl. The flue gas is then desulfurized. Finally, the halogenated mercury is removed with an alkaline absorbent solution. US20160059185 describes a desulfurization unit that removes sulfur oxide from an exhaust gas by means of a limestone/gypsum method and carbon dioxide recovery.

US 3980758 discloses that it is possible to avoid the continuous formation of azeotropic hydrochloric acid by introducing the azeotropic hydrochloric acid collected in the absorber receptacle and stored in the reservoir, instead of water, into the combustion chamber.

CN107961645 provides a processing method for the treatment of gas containing chlorine. The method comprises successively passing the gas through a quench tower, a primary absorption tower and a secondary absorption tower. In the primary absorption tower, water is used for absorption and alkaline water is used for absorption in the secondary absorption tower.

GB1350727 describes a method for burning halogenated organic substances. Aqueous acidic solutions, e.g. HCl, are prepared by removing the acidic gases present in the gas stream produced during the combustion of halogenated organic substances, by cooling and absorption in water or an aqueous halogenic acid.

US20030044336 describes a method for reducing the elemental halogen present in a gaseous effluent from an incinerator for burning halogenated residues comprising contacting the effluent with hydrazine.

The known processes use bases and obtain neutralized solutions with high salt concentrations, which are difficult to exploit further. Purification methods using water require very large columns, are difficult to adapt to different waste streams that are incinerated and do not meet current strict environmental standards.

The present invention aims to find an improvement with respect to these methods in which, for example, toxic products are used to remove pollutants from the flue gases or non-reusable waste streams are obtained.

### SUMMARY OF THE INVENTION

In a first aspect, the invention relates to a method for cleaning flue gas originating from the combustion of chlorine-comprising material, according to claim 1. Preferred forms of the method are shown in claims 2 to 11.

The method comprises a first absorption step, then an adsorption step and then an absorption step again. The absorbent will remove a large amount of chlorine from the flue gases during the first step, as a result of which the concentration of HCl in the obtained liquid is very high. The second step, with activated carbon, is mainly necessary to remove components that are less water-soluble from the flue gases. In a third step, residual pollutants are removed, resulting in a purified flue gas. This method has the effect of obtaining a purified flue gas. The liquid obtained from the packed columns has a high HCl concentration and can be used as a catalyst or raw material.

In a second aspect, the invention relates to a device for cleaning flue gas originating from the combustion of chlorine-comprising material according to claim 12. Preferred embodiments of the device are shown in claims 13 and 14.

In a third aspect, the invention relates to a cleaned flue gas obtained by cleaning flue gas originating from the combustion of chlorine-comprising material, for example liquid waste material, according to claim 15, by means of a method according to the first aspect of the invention.

### DESCRIPTION OF THE FIGURES

**Fig. 1** shows a schematic representation of a method and device for cleaning flue gas originating from the combustion of chlorine-comprising material, for example liquid waste material, according to embodiments of the invention.
**Fig. 2** shows a schematic process flow of a method and device for cleaning flue gas from the combustion of chlorine-comprising material, according to embodiments of the invention.
**Fig. 3** shows a schematic overview diagram for cleaning flue gas from the combustion of chlorine-comprising material, according to embodiments of the invention.

### DEFINITIONS

Unless otherwise defined, all terms used in the description of the invention, including technical and scientific terms, have the meaning as commonly understood by a person skilled in the art to which the invention pertains. For a better understanding of the description of the invention, the following terms are explained explicitly.

In this document, "a" and "the" refer to both the singular and the plural, unless the context presupposes otherwise. For example, "a segment" means one or more segments.

The terms "comprise," "comprising", "consist of", "consisting of", "provided with", "include", "including", "contain", "containing", are synonyms and are inclusive or open terms that indicate the presence of what follows, and which do not exclude or prevent the presence of other components, characteristics, elements, members, steps, as known from or disclosed in the prior art.

Quoting numerical intervals by endpoints comprises all integers, fractions and/or real numbers between the endpoints, these endpoints included.

The term "dioxins", as used in this text, can be understood as unwanted combustion by-products, due to incomplete combustion and De-Novo synthesis in the boiler cooling stage, which are a large family of molecules that have in common that they have two have benzene rings. These rings are linked through one or two oxygen atoms and contain chlorine atoms. Dioxins are therefore formed from carbon, hydrogen, chlorine and oxygen. Not all dioxins are equally toxic. The toxicity increases with the number of chlorine atoms at the corners of the benzene rings. The most toxic dioxin is the so-called Seveso dioxin or 2,3,7,8-tetrachlorodibenzodioxin (2,3,7,8-TCDD).

The term "pollutants," as used in this text, can be understood as chlorine ions, chlorine-comprising components, salts, metals, dioxins, or other organic components.
The term "adsorbent" in this document refers to a substance that adsorbs, and in particular to a solid that has the property of attaching other substances to its surface without any covalent bond. A well-known example of an adsorbent is activated carbon.

The term "absorbent" in this document refers to a substance that absorbs, and in particular to a liquid that has the property of dissolving and absorbing liquids or gases. A well-known example is, for example, an acidic solution for the removal of ammonia in pig houses.

The term "activated carbon" in this document refers to a form of carbon that is processed to have small pores with a small volume that increase the surface area available for adsorption or chemical reactions. Activated carbon is an adsorbent product obtained from raw materials rich in carbon (wood, peat, coal, lignite, coke, coconut husk, fruit kernels, etc.).

The expression 'percentage by weight' or "wt%," here and throughout the text, refers to the relative weight of a respective component based on the total weight of a composition of components.

"Washing columns" or "absorption columns" or "gas scrubbers" are hollow structures within which pollutants are removed from a gas stream. A "packed column" is an absorption column with a "packed bed". This packed bed is a solid material that improves absorption, for example by increasing the contact surface between the pollutants and the absorbent.

### DETAILED DESCRIPTION

In a first aspect, the invention relates to a method for cleaning flue gas originating from the combustion of chlorine-comprising material, in which at least the following cleaning steps are applied to the flue gas:
- cooling and absorbing pollutants in a quench;
- absorbing pollutants in one or more packed columns;
- adsorbing pollutants on one or more activated carbon filters;
- absorbing pollutants in one or more absorption columns; and
- expelling cleaned flue gas thus obtained,
characterized in that an absorbent flows through the packed columns in the opposite direction of flow to the flue gas and consists of at least 90 wt% water, preferably at least 95 wt% water, upon entering one or more absorption columns.

Because the absorbent flows in the opposite direction to the flue gas through the packed columns and consists of at least 90 wt% water when it enters one or more absorption columns, the flue gas can be purified with a limited use of absorbent. In addition, a solution with a high hydrochloric acid concentration is obtained and no additional chemicals need to be added to the absorbent. The obtained absorbent, with a high concentration of hydrochloric acid, can be used in other processes. The hydrochloric acid in the flue gas has thus been converted from a pollutant into a valuable end product.

According to an embodiment, the cleaning steps are performed in separate devices.

According to an embodiment, the cleaning steps of the flue gas are performed in a sequence where
- first, the cooling and absorption of pollutants continues in a quench;
- then absorbing pollutants in one or more packed columns;
- then absorbing pollutants in one or more absorption columns;
- then adsorbing pollutants on one or more activated carbon filters; and
- then expelling cleaned flue gas thus obtained.

According to an embodiment, the flue gas flows through the one or more packed columns in which the flue gas comes into contact with a liquid with a pH lower than 7, then through the one or more absorption columns and then through the one or more activated carbon filters. The flue gas preferably only flows through the one or more activated carbon filters after it has flowed through the one or more packed columns and the one or more absorption columns, so that the activated carbon filters are less affected. The carbon can react with chlorine gas present in the flue gas and convert it to HCl. The carbon will slowly oxidize. Due to this placement of the one or more activated carbon filters, the exposure to chlorine gas will be lower, making the carbon less likely to break down and the particle size to decrease. This could otherwise lead to a greater pressure drop and ultimately to clogging.

According to an embodiment, at least the following cleaning steps are applied to the flue gas in separate devices and in this order: cooling and absorbing pollutants in a quench; absorbing pollutants in one or more packed columns; absorbing pollutants in one or more absorption columns; and adsorbing pollutants on one or more activated carbon filters; absorbing pollutants in one or more absorption columns; and expelling cleaned flue gas thus obtained, wherein an absorbent flows through the packed columns in the opposite direction of flow to the flue gas and consists of at least 90 wt% water upon entering one or more absorption columns.

According to one embodiment, at least the following cleaning steps are applied to the flue gas in this order and in separate devices:
- cooling and absorbing pollutants in a quench;
- absorbing pollutants in one or more packed columns;
- adsorbing pollutants on one or more activated carbon filters;
- absorbing pollutants in one or more absorption columns; and
- expelling cleaned flue gas thus obtained,
wherein an absorbent flows through the packed columns in the opposite direction of flow to the flue gas and consists of at least 90 wt% water, preferably at least 95 wt% water, upon entering one or more absorption columns.

In an embodiment, the first absorption step comprises a quench and two or more packed columns. In the quench, the flue gas is cooled, and a large amount of hydrochloric acid is absorbed.

In an embodiment, the flue gas path passes through a quench, packed columns, activated carbon filters and absorption columns. The quench receives flue gases from the electrofilter with a temperature of 200-250°C and will further cool them to a temperature of 90-40°C. The flue gases then pass through a demister to at least one or more packed columns where HCl is absorbed. A fan keeps the packed columns under negative pressure. The flue gases are then passed over one or more activated carbon filters. Here, Cl₂ will be converted into Cl⁻ and organic molecules will be adsorbed. The flue gas is further purified in one or more absorption columns. Finally, the flue gas is released into the atmosphere through the flue-gas stack.

In an embodiment, the path of the absorbent is through the absorption columns, packed columns and quench. Part of the absorbent can also be sent over the activated carbon filter. The absorbent will go through the process in reverse and can be replenished, returned or disposed of at any point in the system. The absorbent entering the one or more absorption columns is mainly water. It will dissolve residual pollutants and have a relatively low HCl concentration, preferably less than 2 wt%. At least 50 wt% of the absorbent is not sent over the one or more activated carbon filters, but directly to the at least one or more packed columns. The packed columns are equipped with recirculation pumps which can recirculate the absorbent over different beds. A packed column can contain 1 or more packed beds. There may be two packed columns with two packed beds per column. Recirculation over these beds ensures a high concentration of HCl in the absorbent. The concentration of HCl in these packed columns rises from 0.5-3 wt% to 20-30 wt%. Halfway, i.e. between the first and second column, the absorbent contains 5-17 wt% hydrochloric acid. In the quench, the HCl concentration in the absorbent rises further, as does the temperature. Part of the absorbent is sent to the incinerator and/or to the water purifier and/or used as raw material for other processes. According to an embodiment, circulation does not take place over all packed beds.

According to an embodiment, the absorbent coming out of the quench is partly injected back into the combustion chamber. As a result, less clean water needs to be injected. According to an embodiment, after the quench, the flue gas flows through a filter, preferably an electrofilter, whereby particles comprising pollutants such as metals and salts can be removed from the gas stream. In this way, fewer pollutants end up in the rest of the packed columns.

According to an embodiment, the activated carbon filter consists of a granulate of coke, lignite or charcoal. According to an embodiment, the activated carbon filter consists of a granulate activated at a temperature of 500-1500°C, preferably at 500-600°C, at 700-900°C or at 1000-1500°C. According to an embodiment, the activated carbon filter consists of a granulate with a particle diameter of 1-4 mm, 4-8 mm or 8-20 mm.

In an embodiment, the absorbent in the packed columns has a pH lower than 7, preferably lower than 2. According to an embodiment, the concentration of HCl in the absorbent in the packed columns increases from 0.5-3 wt% to 20-30 wt%, preferably from 1-2 wt% to 17-24 wt%.

According to an embodiment, the absorbent entering the packed columns has a pH of less than 7, preferably less than 5, more preferably less than 1. Because the flue gas in the packed columns does not come into contact with an absorbent with a pH > 7, preferably > 5, the HCl is not neutralized. According to an embodiment, the concentration of HCl in the absorbent in the packed columns increases from 0.5-3 wt% to 20-35 wt%, preferably from 1-2 wt% to 20-30 wt%. According to an embodiment, the absorbent is recirculated over the packed columns until the HCl concentration in the absorbent is 10-35 wt%, preferably 20-30 wt%. According to an embodiment, there are three packed columns and the absorbent is recirculated over the packed column through which the flue gas flows last until the HCl concentration in the absorbent is 2-5 wt%. According to a further embodiment, the absorbent is recirculated over the packed column through which the flue gas flows second, until the HCl concentration in the absorbent is 12-20 wt%. According to a further embodiment, the absorbent is recirculated over the packed column through which the flue gas flows first until the HCl concentration in the absorbent reaches 20-30 wt%.

According to an embodiment, the absorbent is at least partially recirculated over the packed columns. Using a pump, part of the absorbent is sprayed back above the packed bed of the same column. In this way, more hydrochloric acid dissolves per liter of absorbent used. In addition, an absorbent with a high concentration of hydrochloric acid is obtained that can be used in other applications, possibly after further purification.

According to an embodiment, the absorbent has a maximum hydrochloric acid concentration of 15-30 wt%, preferably 20-30 wt%. The concentration of hydrochloric acid is an important parameter for the application possibilities of the hydrochloric acid. Because the method comprises a recirculation and aqueous absorbent, such high hydrochloric acid concentrations can be achieved.

According to an embodiment, 90 wt% of the chlorine in the flue gas ends up in the absorbent, more preferably 97 wt%, even more preferably 99 wt%. As a result, the cleaned flue gas obtained contains a concentration of chlorine lower than 50 mg/Nm³ and preferably lower than 10 mg/Nm³ on a daily basis.

According to an embodiment, the absorbent is brought into contact with the flue gas by adding a fixed amount of absorbent per hour to the flue gas, where it is then possible to check whether the fixed quantity needs to be adjusted by carrying out a dioxin measurement after a certain period. This makes it possible to determine in a quantitative way how much adsorbent should be added to a flue gas to be cleaned. In a more preferred embodiment of the method, the dioxin measurement is performed after 14 days.

According to an embodiment, water droplets are removed from the flue gas between the quench and one or more packed columns. A demister ensures that the absorbent cannot go along with the flue gas stream in order to flow back to the packed columns. The absorbent in the quench has a high concentration of pollutants which could reduce the efficiency of the process, for example jeopardize the purity of the absorbent. According to an embodiment, water droplets are removed from the flue gas before the carbon filters and after the last packed column.

In an embodiment, the absorbent has a pH less than 3 as it enters a packed column. According to an embodiment, the absorbent is sent through the packed columns in the opposite direction to the flue gases. High concentrations of HCl are dissolved in the absorbent obtained. Since no strong bases are dissolved in the absorbent, the pH of the solution will be low. This makes the absorbent suitable for use as an acid in other processes.

In an embodiment, the absorbent contains no added chemicals. By added chemicals is meant: no solids, salts, organic substances, polymers or acids. The absorbent mainly consists of water, preferably process water that is purified and reused. As a result, the consumption of absorbent and water is limited to maintaining the volumes. According to an embodiment, tap water, industrial water or canal water is used as absorbent.

According to an embodiment, the absorbent has a pH of less than 7, preferably less than 6, more preferably less than 4. This allows the hydrochloric acid to dissolve as much as possible as acid and the pH of the absorbent after absorbing is as low as possible. Should the pH of the absorbent exceed 7, the hydrochloric acid would neutralize during absorption, which would not result in a valuable product.

According to an embodiment, the absorbent is sprayed over a packing material, preferably with a droplet size greater than 0.1 mm, preferably greater than 0.5 mm and thus without atomizing it. Atomizing requires more energy compared to spraying. Since the water over the packed bed has a long contact time with the flue gases, reducing the droplet size is not necessary, and therefore atomizing is not necessary. According to a further embodiment, the packing material comprises a plastic, preferably the plastic comprises polypropylene, teflon, polyethylene, polyvinylidene fluoride, a phenyl formaldehyde resin, glass, asbestos, basalt, vinyl ester, polyester, a similar polymer or a combination thereof. According to an embodiment, the packing material comprises polyvinylidene fluoride. Polyvinylidene fluoride is very acid resistant and suitable for use as a packing material.

The packing material provides a pressure drop per theoretical stage of 0.1 - 2.0 mbar, preferably 0.3 - 1.0 mbar. At 70-80% flooding, the pressure drop is approximately 2 mbar/m. The minimum liquid load is approximately 0.2 m³/m²h. The maximum liquid load is at least 200 m³/m²h. Because packing material is used, the contact surface between liquid and gas is greatly increased, which improves the transfer of chlorine from the gas phase to the liquid phase. If no packing material were present, the columns would have to be at least 10 times larger to achieve the same removal of chlorine. In an embodiment, the packing material is structured packing. The removal of HCl from flue gas without the use of additives such as NaOH or Ca(OH)₂ requires a large exchange surface.

According to an embodiment, the packing material comprises at least 70 wt% of C-PVC (post-chlorinated PVC), polyvinylidene fluoride (PVDF) or a composition based on Bisphenol A and epoxy vinyl ester resin, preferably the packing material consists of PVDF or C-PVC. According to an embodiment, the packing material comprises plates, preferably these plates are located substantially vertically side by side in the column, more preferably the plates are corrugated, preferably diagonally corrugated, more preferably the plates are placed crossed over each other. This creates more turbulence. According to an embodiment, the plates are perforated. According to an embodiment, a reactor cross-section comprises 5-50 plates per m², preferably 10-25. In an embodiment, the packing material comprises diagonally corrugated sheets of polyvinylidene fluoride substantially vertically side by side in the column at a minimum distance of 1-15 cm between each other and a maximum distance of 10-30 cm between each other, preferably at a minimum distance of 1-10 cm between each other and a maximum distance of 12-30 cm between each other. The plates are preferably placed staggered next to each other. So, for example, the first plate is corrugated along the diagonals from bottom left to top right, and the next plate is corrugated from top left to bottom right. Because the plates are corrugated, a minimum and maximum distance between the plates can be measured by taking a cross-section of the column and constructing straight lines that pass through at least 2 bending points of a plate. Polyvinylidene fluoride is acid resistant and strong enough to be used as a packing material under these conditions. The temperature is high, and the pH is low, preferably below 0. Because the flue gases are not scrubbed with bases, as in the methods known in the prior art, the packing material is exposed to much harsher conditions. According to an embodiment, the absorption of hydrochloric acid from the flue gas continues in three absorption columns with packing material, preferably wherein the packing material comprises diagonally corrugated plates, placed substantially vertically side by side in the column.

According to an embodiment, the absorption in the packed columns continues at negative pressure. This is caused by an induced draught fan suitable for depressurizing the packed columns. According to an embodiment, the activated carbon filters and the last absorption column are under overpressure.

According to an embodiment, the absorption of pollutants continues in three packed columns, a pump being provided for each column, suitable for recirculating the liquid over each column. As a result, a product with a high HCl concentration can be obtained and the concentration of HCl in the product can be properly controlled. Even with changing waste streams that are incinerated, a product can be obtained with a similar HCl concentration. Preferably the HCl concentration in the final product is 15-35 wt%, more preferably 18-27 wt%. Preferably, the flue gas stream and the liquid stream run in opposite directions. This results in a better adsorption of HCl in the liquid.

According to an embodiment, droplets are removed from the gas stream after absorption. Preferably, after the wet absorption and before the activated carbon filter, the flue gas is flowed through a demister to separate liquid droplets. As a result, fewer water droplets come into contact with the activated carbon filter, resulting in better control of the hydrochloric acid concentration per absorption stage.

The embodiment of the method as described has the effect that acids, heavy metals and dioxins can thus be absorbed in the absorbent, after which the adsorbent can capture heavy metals and dioxins and reduce Cl₂ to Cl⁻, after which an additional absorption step can capture the remaining acids. According to an embodiment, the activated carbon filters are regularly rinsed. The rinse water is preferably used in the adsorption of HCl.

The method has the effect of enabling a thorough cleaning of the flue gas in terms of removal of said acidic pollutants. The preferred method has the effect that the most efficient possible removal of said acidic pollutants can be obtained. Without the use of toxic absorption products and with a valuable product as a result.

The method thus comprises a first absorption step, then an adsorption step and then an absorption step again. The absorbent will remove a large amount of chlorine from the flue gases during the first step, as a result of which the concentration of HCl in the obtained liquid is very high. The second step, with activated carbon, is mainly necessary to remove components that are less water-soluble from the flue gases. In a third step, residual pollutants are removed, resulting in a purified flue gas. This method has the effect of simplifying the separation and/or purification of polluted water for reuse in the cleaning process. The liquid obtained after the third step has a low concentration of pollutants and is used in the first step. The liquid obtained after the first absorption step has a high acid concentration and can be used in other processes.

In a second aspect, the invention relates to a device for carrying out the method according to the first aspect or carrying it out according to any of the preceding embodiments, comprising a quench, one or more packed columns; one or more activated carbon filters; and one or more absorption columns, characterized in that the device comprises pumps suitable for recirculating part of a liquid leaving the gas scrubbers.

In an embodiment, the quench, one or more packed columns; one or more activated carbon filters; one or more absorption columns; and the pumps, are separate devices. According to an embodiment, a combustion chamber is provided for the combustion of chlorine-comprising material. According to an embodiment, the combustion chamber is connected to the quench through a first flue gas channel, and the quench is connected to the one or more packed columns through a second flue gas channel, and the one or more packed columns are connected to one or more absorption columns through a third flue gas channel, and the one or more absorption columns are connected to one or more activated carbon filters via a fourth flue gas channel.

Because the liquid is recirculated, less volume of required absorbent is needed. The packing materials can be kept moist with less absorbent required. A higher concentration of HCl in the absorbent is obtained. The obtained hydrochloric acid can be used in other applications. A higher purity of hydrochloric acid can be used for several applications and is economically interesting.

The activated carbon filter, according to an embodiment, uses various qualities of non-impregnated activated carbon for the removal of chlorine and volatile organic components. To further improve the affinity of activated carbon for certain components, it can be impregnated with chemicals. This creates chemisorption, which enhances the removal properties of activated carbon. The activated carbon filter uses, according to an embodiment, impregnated and catalytic activated carbon for the removal of inorganic substances (Hg, NH₃, H₂S, etc.). The activated carbon filter, according to an embodiment, uses a combination of non-impregnated activated carbon and impregnated and catalytic activated carbon.

According to an embodiment, the device furthermore comprises an induced draught fan which keeps the installation under negative pressure in order to avoid the escape of the flue gases to the atmosphere in the event of leaks.

According to an embodiment, the device further comprises a conductivity meter for measuring the conductivity of liquids after they leave the additional gas scrubbers. This embodiment has the effect that in this way it can be decided in a quantitative way how polluted water should be post-treated. In addition, the conductivity indicates whether the load on the gas scrubber is acceptable.

In a third aspect, the invention relates to a cleaned flue gas obtained according to the method described in the first aspect or the device described in the second aspect for cleaning flue gas originating from the combustion of chlorine-comprising material, for instance liquid waste material.

In what follows, the invention is described by way of non-limiting examples illustrating the invention, and which are not intended to and should not be interpreted as limiting the scope of the invention.

### EXAM PLES

For advantages and technical effects of elements described below in the Examples, reference is made to the advantages and technical effects of corresponding elements described above in the detailed description.

### EXAMPLE 1

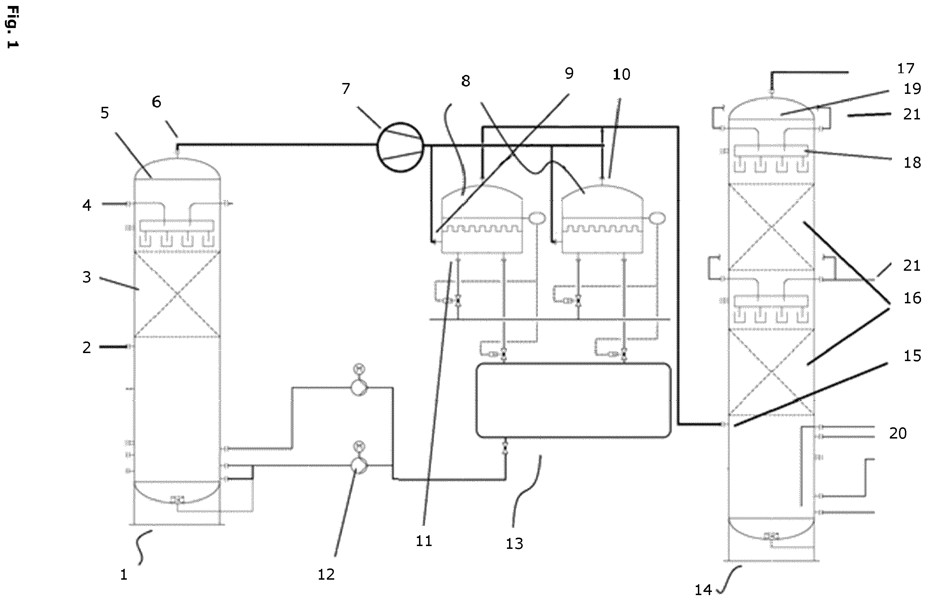

Example 1 relates to a method and a device for cleaning flue gas originating from the combustion of chlorine-comprising material, for example liquid waste material, according to embodiments of the invention. The method and device according to Example 1 are schematically illustrated in Fig. 1. In Fig. 1, parts of the device are indicated by numbers.

According to Example 1, flue gas cleaning is applied to a flue gas obtained by the combustion of chlorine-comprising waste in an incinerator (not shown in Fig. 1). For example, a selective non-catalytic reduction (SNCR) system is installed in the incinerator. With the SNCR system, urea is added to the flue gas as a reducing agent at a high temperature (because it is present in the incinerator), reducing nitrogen oxides to N₂, water and CO₂.

After any SNCR, the flue gas is further cleaned in an electrostatic filter and quench (both not shown in Fig. 1). In the first absorption column 1, a first removal of acidic pollutants comprising HCl, SO₂ and HF is carried out. The flue gas enters the absorption column along the gas inlet 2 along the side. The gases come into contact with the absorbent, mainly water, in the packed bed 3. The absorbent is sprayed in via the absorbent inlet 4 at the top of the absorption column 5 and slowly percolates through the packed bed 3. An absorbent according to Example 1 is injected through this liquid distributor for the absorption of heavy metals, such as for instance lead, mercury and cadmium, and also of dioxins from the flue gas. Heavy metals and dioxins are thus absorbed in the absorbent, but residual pollutants can be further adsorbed in the activated carbon filters. The counterflow of flue gas and water allows optimum water use. The flue gas will pass through a demister (not shown) to stop droplets of absorbent and leave the first absorption column 1 via outlet 6.

An induced draught fan 7 keeps the installation under negative pressure, so that the gas stream is determined. The flue gas flows via the induced draught fan 7 to the activated carbon filter 8. Again, the hot flue gas will enter the cleaning system from the side 9 and exit from the top 10. At least two activated carbon filters are installed so that there is always one spare, for example 5 activated carbon filters. Depending on the required cleaning time, the optimal filter arrangement can be determined. Condensate formed on the activated carbon filter is drained off 11 and flows together with the absorbent from the first absorption column 1, which enters via a pump 12, into a storage tank 13. This acidic solution can optionally be further purified. It is also possible to use the condensate and rinse water from the activated carbon filter as an absorbent in the absorption column. The absorbent obtained from the absorption column can be used as a product in other processes.

The flue gas that has already been purified in a first absorption column 1 and in an activated carbon filter 8 will then be further cleaned in an additional absorption column 14. In the additional washing column 14, the absorption of residual acidic pollutants, mainly HCl and SO2, is completed. Flue gas thus cleaned flows from the inlet along the side 15 via the packed bed 16 to the outlet 17 at the top of the absorption column 19. This absorption column 14 comprises a liquid distributor 18 which distributes circulated water, through which the flue gas is cleaned and further cooled. A demister (not drawn) will remove any liquid droplets from the flue gas. After the demister, the flue gas is released to the environment through a flue-gas stack (not shown in Fig. 1).

Water is circulated through the additional washing column 14, aiming for a pH lower than 7. Residual acidic pollutants including HCl, SO₂ and HF are further captured. Absorbent leaving the additional absorption column via the outlet 20 will be sprayed, possibly after a purification step back via the inlet, into the additional absorption column, via inlet 21. If necessary, several absorption columns are set up in each case.

The water of the extra washing column 14, also referred to as washing water or process water, is circulated by means of a recirculation pump. Lye (NaOH) is optionally added to the water in the water purifier to aim for a pH of 7. The process water can be reused to clean the flue gas.

Measures are in place to purify process water after gas scrubbing.
1 first absorption column
2 gas inlet
3 packed bed
4 absorbent inlet
5 top of absorption column
6 flue gas outlet
7 induced draught fan
8 activated carbon filter
9 flue gas inlet in activated carbon filter
10 flue gas outlet in activated carbon filter
11 condensate outlet
12 pump
13 acidic liquid storage tank
14 additional absorption column
15 flue gas inlet
16 packed bed
17 cleaned flue gas outlet
18 sprayers
19 top of additional absorption column
20 absorbent outlet
21 absorbent inlet

### EXAMPLE 2

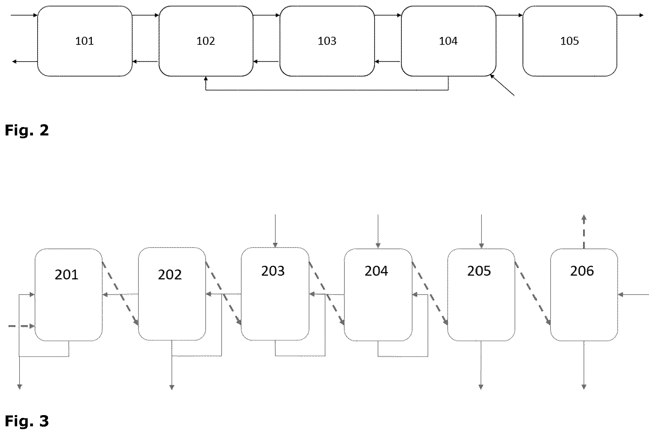

Example 2 relates to a method and a device for cleaning flue gas originating from the combustion of chlorine-comprising material, for example liquid waste material, according to embodiments of the invention. The method and device according to Example 1 are schematically illustrated in Fig. 2. In Fig. 2, parts of the device are indicated by numbers.

The upper arrows, pointing from left to right, indicate the flow direction of the flue gases. The lower arrows, pointing from right to left, indicate the flow direction of the absorbent. Recirculation within, for example, the packed columns is not shown.

The quench **101** receives flue gases from the electrofilter with a temperature of 200-250°C and will further cool them to a temperature of 90-40°C. The flue gases then pass through a demister to at least one or more packed columns **102** where HCl is absorbed. An induced draught fan keeps the packed columns under negative pressure. The flue gases are then passed over one or more activated carbon filters **103.** Here, Cl₂ will be converted into Cl⁻ and organic molecules will be adsorbed. The flue gas is further purified in one or more absorption columns **104.** Finally, the flue gas is released into the atmosphere through the flue-gas stack **105.**

The absorbent will go through the process in reverse and can be replenished, returned or disposed of at any point in the system. The absorbent entering the one or more absorption columns **104** is mainly water. It will dissolve residual traces of chlorine and have a relatively low HCl concentration, preferably less than 2 wt%. At least 50 wt% of the absorbent is not sent over the one or more activated carbon filters **103,** but directly to the at least one or more packed columns **102.** The packed columns **102** are equipped with recirculation pumps which can recirculate the absorbent over different beds. A packed column can contain 1 or more packed beds. There may be two packed columns with two packed beds per column. Recirculation over these beds ensures a high concentration of HCl in the absorbent. The concentration of HCl in these packed columns rises from 0.5-3 wt% to 20-30 wt%. Halfway, i.e. between the first and second column, the absorbent contains 5-17 wt% hydrochloric acid. In the quench **101,** the HCl concentration in the absorbent rises further, as does the temperature. Part of the absorbent is sent to the incinerator and/or to the water purifier.
- 101: quench
- 102: packed columns
- 103: activated carbon filters
- 104: absorption columns
- 105: flue-gas stack

### EXAMPLE 3

Example 3 relates to a cleaned flue gas obtained by means of a method and device according to this invention for cleaning flue gas originating from the combustion of chlorine-comprising waste. The composition of the cleaned flue gas is shown in Table 1. Measurements were carried out in the flue-gas stack through which the cleaned flue gases were emitted to the environment.

**Table 1. Composition of a cleaned flue gas.**

| Parameter | Time base | Measured value |
|---|---|---|
| Total dust | daily average | < 10 mg/Nm³ |
| carbon monoxide (CO) | daily average | < 50 mg/Nm³ |
| | 10-minute average | < 150 mg/Nm³ |
| gaseous and vaporous organic substances, expressed as total organic carbon (TOC) | daily average | < 10 mg/Nm³ |
| gaseous inorganic chlorides, expressed as HCl | daily average | < 10 mg/Nm³ |
| gaseous inorganic fluorides, expressed as HF | continuous measurement | < 1mg/Nm³ |
| Sulfur dioxide, expressed as SO₂ | daily average | < 50 mg/Nm³ |
| Nitrogen oxides (NOₓ), expressed as NO₂ | daily average | < 200 mg/Nm³ |
| Sum of Cd and Tl | discontinuous measurement (2 x per year) | < 0.05 mg/Nm³ |
| Hg | discontinuous measurement (2 x per year) | < 0.05 mg/Nm³ |
| Sum of Sb, As, Pb, Cr, Co, Cu, Mn, Ni, V, and Sn | discontinuous measurement (2 x per year) | < 0.5 mg/Nm³ |
| dioxins / furans | continuous sampling | < 0.1 ng TEQ/Nm³ |
| | discontinuous measurement (2 x per year) | < 0.1 ng TEQ/Nm³ |

### EXAMPLE 4

Example 4 relates to a method and a device for cleaning flue gas originating from the combustion of chlorine-comprising material, for example liquid waste material, according to embodiments of the invention. The method and device according to Example 4 are schematically illustrated in Fig. 3. In Fig. 3, parts of the device are indicated by numbers. The arrows with a dotted line indicate the flow direction of the flue gases. The arrows with a solid line indicate the flow direction of the absorbent. The quench **201** receives flue gases from the electrofilter with a temperature of 200-250°C and will further cool them to a temperature of 50-95°C. The flue gases then pass through a demister to a first packed column **202,** then a second packed column **203** and third packed column **204,** where HCl is absorbed. An induced draught fan keeps the packed columns under negative pressure. When the flue gases exit the third packed column **204,** they are still at a temperature of 40-65°C. The flue gas is further purified in an absorption column **205.** The flue gases always enter the packed columns and absorption column at the bottom and will exit the columns at the top. The flue gases are then passed over one or more activated carbon filters **206.** Finally, the flue gas is released into the atmosphere through the flue-gas stack.

The absorbent will go through the process in reverse and can be replenished, returned or disposed of at any point in the system. The absorbent entering the activated carbon filter **206** is process water. It will dissolve residual traces of chlorine and have a relatively low HCl concentration. It is recirculated and part is returned to the incinerator. By sending it back to the incinerator, the chlorine can be discharged and the concentration of chlorine in the liquid in the activated carbon filter **206** remains sufficiently low. The absorption column **205** is provided with recirculation pumps which recirculate the absorbent over the absorption column **205.** Process water is added, and part of the recirculating absorbent is sent to the incinerator.

Process water is used as an absorbent in the third packed column **204.** Optionally, water with HCl is also added from parts of the process. The absorbent recirculates in part and flows to the second packed column **203** for the other part. The absorbent entering the second packed column has an HCl concentration of 2-5%. In the second packed column, the HCl concentration further increases to 12-20%. The absorbent is partly recirculated and partly flows on to the first packed column **202.** In the first column, the concentration of HCl in the absorbent increases further to 20-30%. Again, part of the absorbent is recirculated. Another part flows to the quench **201** and another part is further processed as a product. The absorbent in the packed columns enters at the top and is sprayed over the beds to provide a large exchange surface. Recirculation over these beds ensures a high concentration of HCl in the absorbent. In the quench **201** the HCl concentration in the absorbent rises further to 21-30%. Part of the absorbent is sent to the incinerator; another part is recirculated.
- 201: quench
- 202: first packed column
- 203: second packed column
- 204: third packed column
- 205: absorption columns
- 206: activated carbon filter

## Claims

1. Method for cleaning flue gas originating from the combustion of chlorine-comprising material, in which at least the following cleaning steps are applied to the flue gas:
- cooling and absorbing pollutants in a quench;
- absorbing pollutants in one or more packed columns;
- adsorbing pollutants on one or more activated carbon filters;
- absorbing pollutants in one or more absorption columns; and
- expelling cleaned flue gas thus obtained,
**characterized in, that** an absorbent flows through the packed columns in the opposite direction of flow to the flue gas and consists of at least 90 wt% water upon entering one or more absorption columns.

2. Method according to claim 1, wherein at least the following cleaning steps are applied to the flue gas in separate devices and in this order:
- cooling and absorbing pollutants in a quench;
- absorbing pollutants in one or more packed columns;
- absorbing pollutants in one or more absorption columns; and
- adsorbing pollutants on one or more activated carbon filters;
- expelling cleaned flue gas thus obtained.

3. Method according to claim 1 or 2, wherein the absorbent is recirculated at least in part over the packed columns.

4. Method according to claim 1, 2 or 3, wherein the absorbent has a maximum hydrochloric acid concentration of 15-30 wt%.

5. Method according to any of claims 1 to 4, wherein the absorbent in the packed columns has a pH less than 7.

6. Method according to any of claims 1 to 5, wherein the absorbent is sprayed over a packing material, preferably with a droplet size greater than 0.1 mm.

7. Method according to claim 6, wherein the packing material partially comprises polyvinylidene fluoride.

8. Method according to any of claims 1 to 7, the absorption in the packed columns continuing at negative pressure.

9. Method according to any of claims 1 to 8, wherein 90 wt% of the chlorine in the flue gas ends up in the absorbent.

10. Method according to any of claims 1 to 9, wherein water droplets are removed from the flue gas, between the quench and one or more packed columns.

11. Method according to any of claims 1 to 10, wherein the absorbent has a pH less than 3 upon entering a packed column.

12. Device for carrying out the method according to any of claims 1 to 11, comprising a quench, one or more packed columns; one or more activated carbon filters; and one or more absorption columns, **characterized in that** the device comprises pumps suitable for recirculating part of a liquid leaving the gas scrubbers.

13. Device according to claim 12, the device further comprising an induced draught fan suitable for depressurizing the packed columns.

14. Device according to claim 12 or 13, wherein the device further comprises a conductivity meter for measuring the conductivity of liquids after they leave the additional gas scrubbers.

15. Cleaned flue gas obtained according to the method described in any of claims 1 to 11 or the device described in any of claims 12 to 14 for cleaning flue gas originating from the combustion of chlorine-comprising material, for example liquid waste material.
